# EUROPEAN PATENT APPLICATION

(11) **EP 4 386 710 A1**
(43) Date of publication of application: **19.06.2024**
(21) Application number: 23213605.1
(22) Date of filing: 01.12.2023
(51) Int. Cl.: G08G 1/005, G08G 1/16, B60Q 1/00, G01S 15/931, B60Q 9/00, B60Q 5/00

(54) **VEHICLE WITH A WARNING DEVICE FOR WARNING A PEDESTRIAN**

(30) Priority: 13.12.2022 DE 102022133112
(71) Applicant: HELLA Saturnus Slovenija d.o.o., 1001 Ljubljana (SI)
(72) Inventor: Stante, Rok, 4207 Cerklje na Gorenjskem (SI)
(74) Representative: Behr-Wenning, Gregor

(57) **Abstract**

Autonomous cars or vehicles need to detect pedestrians or passengers crossing the road ahead of them or being about to cross it and warn them in order to avoid a collision.

In a dense traffic situation, it might be well possible, that there is too much acoustic or visual impact on the pedestrian, such that acoustic or visual warning signals might not be recognized by the pedestrian in a timely manner because the pedestrian might be overwhelmed by acoustic or visual noise in the street.

In order to strongly improve the pedestrian's safety, this invention proposes a vehicle with a warning device for warning a pedestrian using a warning signal which creates a remote haptic sensation in said pedestrian. The pedestrian then will feel "touched" and his attention is fully drawn to the upcoming danger of the approaching vehicle even in noisy or visually distracting surroundings.

## Description

Autonomous cars or vehicles need to detect pedestrians or passengers crossing the road ahead of them or being about to cross it. The vehicle then needs to decide whether it is necessary to warn them in order to avoid a collision.

To this end, the vehicle at least roughly determines the pedestrians position and/or distance as well as the vehicles own velocity, and on account of this decides whether the vehicle is still able to avoid a collision with the pedestrian or not. In case the vehicle cannot stop fast enough to avoid a collision, it should warn the pedestrians in order to avoid accidents.

Typical means for warning a pedestrian of some upcoming danger are acoustic warning signals, like horns, or visual warning signals like flashing lights.

In a dense traffic situation, it might be well possible, that there is too much acoustic or visual impact on the pedestrian. The pedestrian then might soon be overwhelmed by acoustic or visual noise in the street and not be able to understand the acoustic or visual signal transmitted by the vehicle as an important warning of upcoming danger by the approaching car. He/she might ignore the urgency of said warning signal and might ignore the fact that especially he/she is the one being in danger and having to react speedily in order to avoid being hit by the vehicle.

In order to strongly improve the pedestrian's safety, it is therefore an aim of this invention to warn pedestrians by haptic contact: by some sort of "touch" applied to them on distance by the vehicle in case of danger. Such a "remote touch" is silent by nature, therefore does not disturb unrelated other surrounding persons and reaches the pedestrian to be warned immediately and in a timely manner. Therefore, a remote haptic contact avoids disadvantages of audio warnings or visual warnings.

To this end, this invention proposes a vehicle with a warning device for warning a pedestrian who in the driving direction of said vehicle is located at a position and/or distance before said vehicle, said warning device comprising:
a) a pedestrian detection equipment configured to detect the presence of said pedestrian in a monitoring area located in the driving direction of said vehicle before the vehicle,
b) a pedestrian position and/or distance determining equipment configured to determine the pedestrian position and/or distance of said detected pedestrian relative to the vehicle,
c) a velocity determining equipment configured to determine the velocity of said vehicle,
d) a hazard monitoring equipment coupled to the pedestrian detection equipment, the pedestrian position determining equipment and the velocity determining equipment, the hazard monitoring equipment configured to generate, in response to the pedestrian position and/or distance and the speed,
   a warning signal indicating whether there is a risk of the vehicle colliding with the pedestrian,
e) a haptic signal generating equipment coupled to the hazard monitoring equipment and to the pedestrian position and/or distance determining equipment, the haptic signal generating equipment configured to warn said pedestrian in accordance with the warning signal by creating a remote haptic sensation in said pedestrian.

The haptic signal generating equipment might comprise an ultrasound transmitter set comprising at least two ultrasound transmitters. Said transmitters might be configured to create ultrasound signals phase coupled to each other in such a manner that a predetermined interference pattern is produced at a location close to the skin of said pedestrian and creating a remote haptic sensation in said pedestrian.

Alternatively, said haptic signal generating equipment might comprise equipment for transmitting a warning message, and said pedestrian might carry warning message receiving equipment for receiving said warning message, and said warning message receiving equipment might comprise haptic sensation creating equipment being in contact to said pedestrians skin and causing a haptic sensation within said pedestrian.

In any case, the remote haptic sensation caused in the pedestrian might be of a point shape, of some one dimensional shape - like straight lines or curves - or of some two dimensional shape - like squares, circles, triangles etc. Both, one dimensional shapes or two dimensional shapes further might be combined in more complex patterns.

For example, the remote haptic sensation might be caused in two or more not connected skin areas, leaving some space inbetween unattended. Thereby, the remote haptic sensation might have predefined patterns comprising two or more not connected skin areas where remote haptic sensation is caused.

In order to detect the presence of the pedestrian, an optical image or an ultrasound image
of the pedestrian might be taken, and might probably further be analyzed by the hazard monitoring equipment, probably comprising some computing device and using image analysis algorithms to finally decide on the necessity to warn the passenger.

It should be pointed out, that this deciding process in itself needs some attention in order to avoid a situation that a pedestrian is not warned in time. On the other hand, the system should not too often warn any pedestrians that are actually not in danger. A simple "YES/NO" decision might often be inappropriate in practice.

One possibility to overcome a too simple "YES/NO" decision is by using merit function(s) when determining the necessity to warn the pedestrian. A merit function might evaluate e.g. measured passenger position and/or distance and vehicle speed or velocity data by a continuous function value in the range of 0...1 or some percentage value between 0%...100%.

The passenger might then be slightly warned if its danger is estimated as not critical (yet), more strongly warned as the level of danger increases, and very strongly warned if the level of danger is high and immediate.

The warning device can be designed in such a way that it outputs several different warning levels depending on the value of the merit function, in particular at least 2 and preferably at least 3 warning levels.

The haptic signaling device may be designed and coupled to the warning device to generate different haptic signals at the pedestrian for different warning levels.

These haptic signals can in particular have different patterns and/or intensities.

The passenger could then be warned slightly if the danger is not (yet) considered critical, more strongly warned if the danger increases, and optionally very strongly warned if the danger is high and immediate.

It is also possible that the haptic signal generation device is designed to warn the pedestrian at different warning levels with different temporal sequences of haptic signals.

The merit function will then evaluate the situation using some continuously adjustable value in the above named range. If the passenger shall be warned only slightly, the merit function value will be small (e.g. in the range of 10%).

As the danger increases and the pedestrian shall be warned more strongly, the merit function value will increase in value continuously, and finally reach it's highest values (e.g. in the range of 90% or above) in case of immediate danger.

The remote haptic contact then might be adjusted in strength according to the merit function value. The pedestrian will receive only a mildly applied remote haptic contact if the level of danger is still small. As the level of danger increases, the pedestrian will be "touched" more strongly. If the level of danger is high, the remote haptic contact is applied with the strongest possible strength in order to warn the pedestrian of now immediate upcoming danger.

To this end, the image analysis equipment might further comprise a merit function calculation unit configured to calculate a merit function giving a function value evaluating a level of danger for the pedestrian. The remote haptic sensation in said pedestrian might be adjusted according to the level of danger. For example, the function value of the merit function may vary continuously depending on the level of danger for the pedestrian. Another possibility is to have the function value of the merit function vary between more than two intermediate steps depending on the level of danger for the pedestrian.

In addition to the haptic signal generating equipment, the warning device might comprise further equipment for applying additional audio or visual warnings in addition to the remote haptic sensation in the pedestrian.

Further, the hazard monitoring equipment may be coupled to the haptic signal generating equipment in such a way that the haptic signal generating equipment is adjusted according to the level of danger.

The hazard monitoring equipment may be coupled to the haptic signal generating equipment in such a way that the haptic signal generating equipment generates a haptic signal being continuously adjustable according to a level of danger.

The haptic signal generating equipment might further be designed to generate at least two and optionally at least three different haptic signals at the pedestrian, and the hazard monitoring equipment may be coupled to the haptic signal generating equipment such that the haptic signal generating equipment generates a first haptic signal at a first level of danger, a second haptic signal at a second level of danger, and optionally a third haptic signal at a third level of danger.

The haptic signal generating equipment might also be designed to generate a temporal sequence of haptic signals. For example, two haptic signals with a pause inbetween can be applied. Or a small number of two, three, four, five or more such signals can be applied with intermittent pauses. Or even a whole longer succession like some number between five and fifty or more such signals can be applied with intermittent pauses, for example periodically in time with some predetermined duration and some predefined temporal pause might be applied.

This is done to further attain the pedestrian's attention and have him focus on the upcoming danger of a collision with the vehicle approaching him. A temporal succession of haptic signals might be better suited to reach his attention like for example in busy, noisy and distracting environments like inner towns during busy times. The pedestrian in such situations might miss a single haptic signal, but be suitably warned by such a temporal succession of haptic signals.

It should be pointed out, that the pedestrian is in danger, if he/she is situated "before" the vehicle, which means some distance ahead of the vehicle in the vehicles driving direction.

Therefore, in this application, the pedestrian being situated "before the vehicle" is always meant in such a way that the vehicle moves in the direction toward the pedestrian and the distance between pedestrian and vehicle will decrease in short time. The vehicle might of course also be driving backwards. In such case, "before" might very well mean that the pedestrian is located behind the backward driving vehicle, since the vehicles driving direction then is such that the vehicle approaches the pedestrian as the vehicle is driving backwards.

Further, when warning a pedestrian who in the driving direction of the vehicle is located at a position and/or distance before the vehicle, any possible ambiguities in the meaning of "position" vs. "distance" shall be of minor importance within the context of this invention. On the one hand, determining the pedestrians distance might be technically somewhat easier than determining the pedestrians "position". On the other hand, determining the pedestrians position and not just his distance might give additional useful information as for example to know whether the pedestrian is already crossing the street or whether he/she is located on a sidewalk or some other safe place at the side of the street and just happens to be at a short distance before the car when the car passes by.

An example of such a situation might be to consider the case that a street having a sidewalk turns into a curve. As the vehicle follows the curve, there might well be a case that a pedestrian on the sidewalk happens to be at a short distance before the vehicle for a short amount of time - but still safe because the vehicle follows the curved road.

This example also shows that any implications as of the vector character of velocity shall not be considered as limiting within the scope of this invention. The vector character of velocity is considered to some extent due to the fact that a pedestrian might be considered to be situated "before" the vehicle or not - with respect to the vehicle's driving direction.

On the other hand, there is still freedom in this decision. There might even be a considerable safety margin applied, such that pedestrians are warned already, which by mathematically strict means are not yet to be considered as being situated before the vehicle, but are within said safety margin. It is better to warn them too early than too late. Some fractions of a second later they might be in acute danger otherwise.

It should also be pointed out that "speed" may be interpreted in several slightly different contexts. This can be either the speed of the vehicle by itself, relative to ground, so without any relation to any pedestrian. On the other hand, the relative speed or velocity between pedestrian and vehicle might be of some importance due to the fact, that a pedestrian might by himself/herself move towards the vehicle or away from it, such that the relative speed between pedestrian and vehicle might be different than the speed or velocity of the vehicle relative to the ground. This shall not be considered as limiting to the scope of this invention. In most cases, the difference between relative and absolute speed will be small unless the vehicle's speed is very small - and if the vehicle's speed is small, the amount of danger is also considerably reduced.

In the following, further details and aspects of the invention will be explained referring to the figures.

As is well known in the art, according to Huygens principle, wave propagation from one wavefront to another can be explained in such a way that the new wavefront is the envelope of elementary waves emitted from source points of the old wavefront. All typical wave phenomena like reflection, refraction and interference can then easily be explained by analyzing the propagation of these elementary waves.

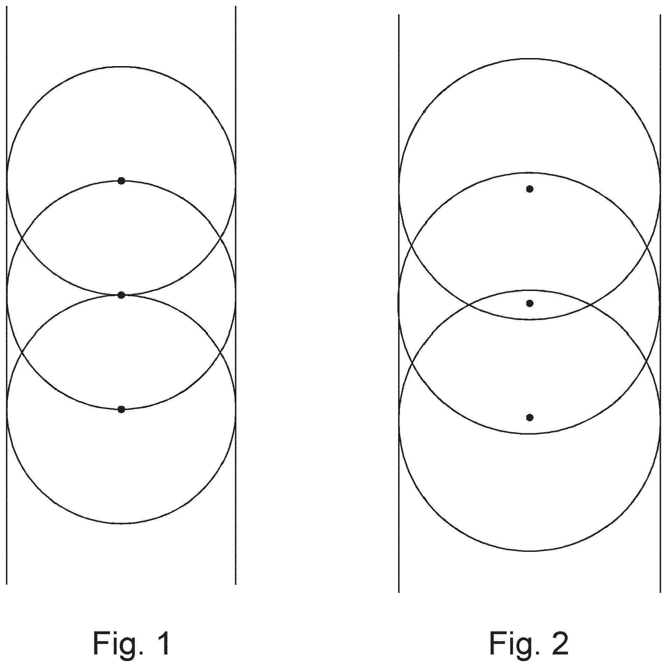

Figures 1 to 4 are exemplary situations to explain the effects of interfering ultrasound waves being emitted with certain predefined phase relations between each other. For reasons of simplicity, only three ultrasound transmitters and their corresponding waves are shown. It is clear that a varying number of transmitters can be used and that they might be arranged in different ways.

Figure 1 shows wave fronts emitted from three ultrasound transmitters that are in phase and are located with equal distances along a straight line. There is no time delay between the three waves. The three circles each represent a wavefront emitted by a respective one of the three ultrasound transmitters. If the setup is at first understood to represent a much greater number of sources, then, due to the symmetry of this arrangement, the enveloping new wave fronts are straight lines. In the real situation, with only three emitters, the enveloping wave front will show some undulation between the thee emitters, and deviate from straight lines outside the setup of course. For reasons of comparison, the circles in figure 1 are shown after one wavelength of propagation.

Figure 2 then shows the same situation after two wavelengths of wave propagation. The circular wave fronts have traveled two wavelength's distance now, and so has their envelope, which still is a straight line.

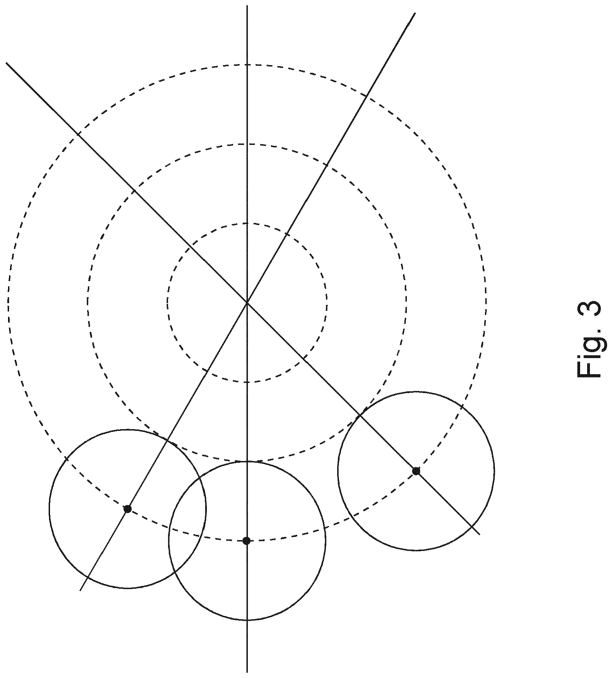

Figure 3 shows a situation in which a point-wise local interference maximum is obtained simply by arranging ultrasound transmitters on a circle around the intended "focus point", which means the point where the ultrasound waves are to overlap to create a more or less point-like interference maximum.

Due to the circular symmetry of the arrangement, it can clearly be seen that in this case any number of transmitters arranged anywhere along the circle will contribute to this interference maximum, because they all have the same phase difference. In the example shown, each of the elementary waves, shown as solid lines, already did propagate half a wavelength from it's transducer (center of the respective circle) and still has to travel one wavelength.

Note, that there is no phase difference needed in this arrangement though: all three elementary waves are in phase. Their circular arrangement is sufficient in itself to create the focusing effect.

Of course, there may be used any number of transmitters, not just three. It is advisable to distribute them over a considerable angular range along their circular path in order to provide a high amount of punctuality to the created interference maximum, as will be obvious to those trained in the art.

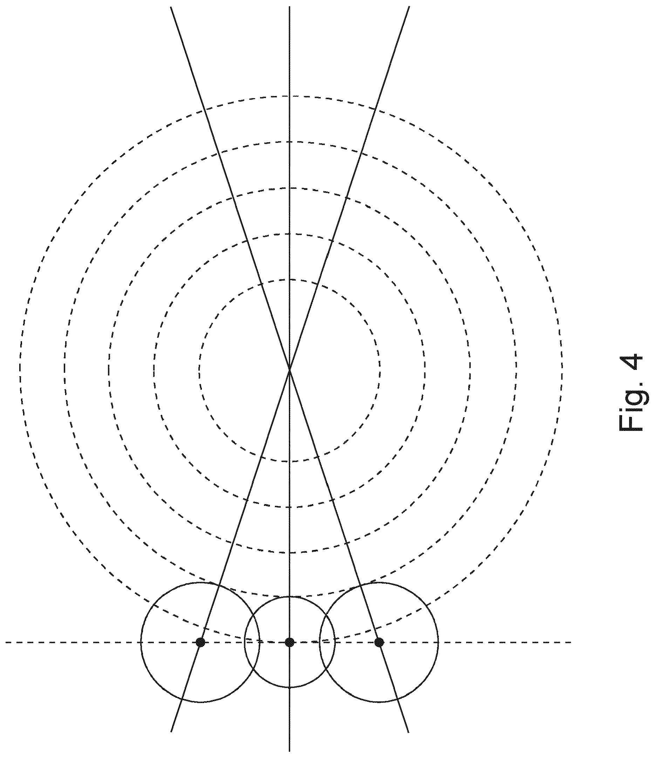

On the other hand, Figure 4 shows a situation in which the three transmitters are still situated along a straight line, as can be confirmed by comparing the dashed vertical line with the biggest circular dashed line: there is a small gap inbetween.

In this case, the approximately point-wise local interference maximum is obtained by phase coupling the ultrasound waves with an appropriate time difference between each other.

The upper and lower circles are slightly larger in diameter: these two elementary waves have to propagate a slightly larger distance in order to allow for all waves being in phase along the dashed circle they are tangent to.

The vertical line carrying the transmitters is five wavelengths away from the center of the dashed circular lines, where the ultrasound waves are interfering to a point-wise local interference maximum.

The dashed circles therefore show, which wave fronts are needed for this intended "focusing". The waves transmitted by the ultrasound transmitters are shown as solid lines. Their phase relationship needs to be arranged in such a way that the solid circles are tangent to the respective corresponding dashed line circles.

This relationship is shown for the situation, when the waves represented by the solid lines just traveled one half wavelength. They then contact a dashed line with radius four wavelengths to the intended origin at the right of the figure. If the figure is watched carefully, it can clearly be seen that the upper and lower circles now are somewhat bigger than the middle circle.

There is a phase difference between the upper transmitter to the center and a corresponding phase difference between the lower transmitter to the center. This phase difference just has to be adjusted in such a way, that the wave fronts of the transmitted circular waves are all tangent to the dashed line. In the same way, when the transmitted circular waves will have traveled one more wavelength, they will be tangent to the next smaller dashed line and so on.

In summary: if a certain predetermined phase delay is provided, a "focusing" situation with a pointwise interference maximum can also be obtained from linearly arranged transmitters.

Also in this arrangement, there may be used any number of transmitters. Their phase delays just need to be carefully adjusted.

Further, from this discussion, it should be clear to a person trained in the art, that many other arrangements of transmitters are able to obtain the same focusing effects as well.

The phase delays of all interfering waves just need to be carefully adjusted to compensate for each transmitters individual distance to the "focus point".

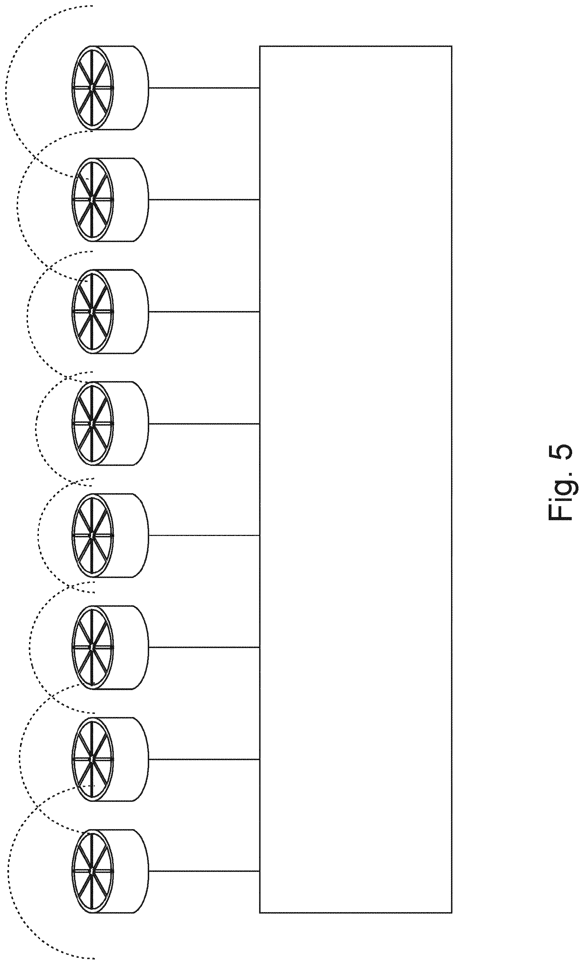

Figure 5 shows an array of ultrasound transmitters for creating a haptic sensation on a person's skin using ultrasonic waves. If these ultrasound transmitters are phase coupled in an appropriate way, a full variety of interference patterns may result leading to respective haptic sensations.

As explained above, these patterns (and the corresponding respective sensation) may be point-like, in form of a straight or curved line, one dimensional in any other shape or even two or three dimensional in shape.

Further, it is possibility to create patterns consisting of areas showing haptic sensation and areas that are not showing haptic sensation in neighborhood to each other, and these haptic sensations might also vary in time. For example, such a pattern might be an array of alternating contact and non-contact areas. If, in addition, these areas are alternated periodically in time with a certain time period, an effect of a traveling wave of haptic sensation might be created in the pedestrian to further trigger his attention and thereby better warn him of the upcoming danger.

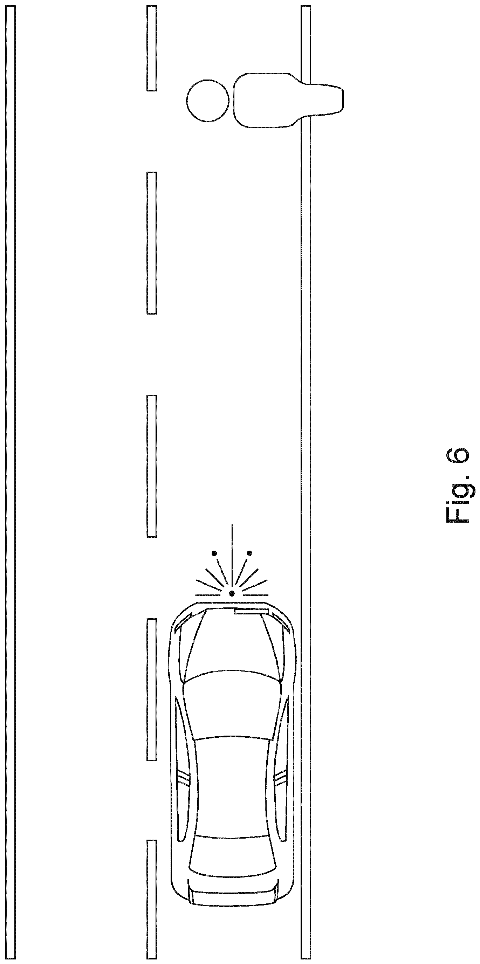

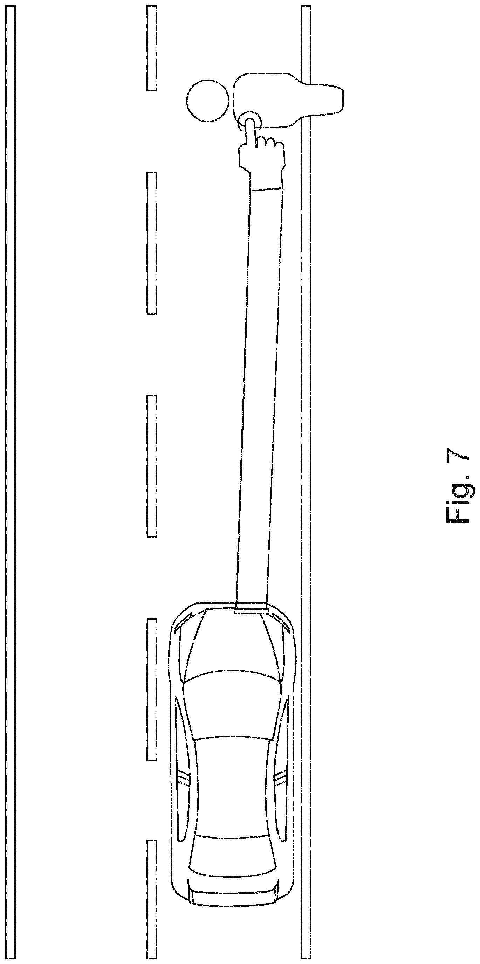

Figures 6 and 7 show the two steps necessary to successfully implement the invention.

In a first step, as shown in figure 6, the vehicle detects a pedestrian who might cross the road in a dangerous manner.

In a second step, as shown in figure 7, this pedestrian is warned via remote haptic sensation. The hand and elongated arm depicted in figure 7 are to be interpreted symbolically: the vehicle-based system according to the invention will create a remote haptic sensation in the pedestrian which will make him feel "like being touched".

## Claims

1. Vehicle with a warning device for warning a pedestrian who in the driving direction of said vehicle is located at a position and/or distance before said vehicle, said warning device comprising:
a) a pedestrian detection equipment configured to detect the presence of said pedestrian in a monitoring area located in the driving direction of said vehicle before the vehicle,
b) a pedestrian position and/or distance determining equipment configured to determine the pedestrian position and/or distance of said detected pedestrian relative to said vehicle,
c) a velocity determining equipment configured to determine the velocity of said vehicle,
d) a hazard monitoring equipment coupled to the pedestrian detection equipment, the pedestrian position determining equipment and the velocity determining equipment, the hazard monitoring equipment configured to generate, in response to the pedestrian position and/or distance and the speed,
a warning signal indicating whether there is a risk of the vehicle colliding with the pedestrian,
e) a haptic signal generating equipment coupled to the hazard monitoring equipment and to the pedestrian position and/or distance determining equipment, the haptic signal generating equipment configured to warn said pedestrian in accordance with the warning signal by creating a remote haptic sensation in said pedestrian.

2. Vehicle with a warning device according to claim 1, wherein said haptic signal generating equipment comprises an ultrasound transmitter set comprising at least two ultrasound transmitters, said transmitters being configured to create ultrasound signals phase coupled to each other in such a manner that a predetermined interference pattern is produced at a location close to the skin of said pedestrian and creating a remote haptic sensation in said pedestrian.

3. Vehicle with a warning device according to any of the preceding claims, wherein the remote haptic sensation caused in the pedestrian is of a point shape.

4. Vehicle with a warning device according to any of the preceding claims, wherein the remote haptic sensation caused in the pedestrian is of a one dimensional shape.

5. Vehicle with a warning device according to any of the preceding claims, wherein the remote haptic sensation caused in the pedestrian is of a two dimensional shape.

6. Vehicle with a warning device according to any of the preceding claims, wherein the remote haptic sensation caused in the pedestrian is of a curve shape.

7. Vehicle with a warning device according to any of the preceding claims, wherein the remote haptic sensation caused in the pedestrian shows predefined patterns.

8. Vehicle with a warning device according to claim 7, wherein said predefined patterns comprise two or more not connected skin areas where remote haptic sensation is caused.

9. Vehicle with a warning device according to any of the preceding claims, wherein said pedestrian detection equipment comprises optical equipment configured to take an optical image of said pedestrian.

10. Vehicle with a warning device according to any of the preceding claims, wherein said pedestrian detection equipment comprises ultrasound equipment configured to take an ultrasound image of said pedestrian.

11. Vehicle with a warning device according to claim 9 or 10, wherein said hazard monitoring equipment comprises image analysis equipment configured to analyze said images and create said warning signal accordingly.

12. Vehicle with a warning device according to claim 11, said image analysis equipment further comprising a merit function calculation unit configured to calculate a merit function giving a function value evaluating a level of danger for the pedestrian.

13. Vehicle with a warning device according to claim 12, wherein the hazard monitoring equipment is coupled to the haptic signal generating equipment in such a way that the haptic signal generating equipment is adjusted according to said level of danger.

14. Vehicle with a warning device according to claim 12 or 13, wherein the hazard monitoring equipment is coupled to the haptic signal generating equipment in such a way that the haptic signal generating equipment generates a haptic signal being continuously adjustable according to a level of danger.

15. Vehicle with a warning device according to claim 12 or 13, wherein the haptic signal generating equipment is designed to generate at least two and optionally at least three different haptic signals at the pedestrian, and that the hazard monitoring equipment is coupled to the haptic signal generating equipment such that the haptic signal generating equipment generates a first haptic signal at a first level of danger, a second haptic signal at a second level of danger, and optionally a third haptic signal at a third level of danger.

16. Vehicle with a warning device according to any of the preceding claims, wherein the haptic signal generating equipment is designed to generate a temporal sequence of haptic signals.
